# EUROPÄISCHE PATENTANMELDUNG

(11) **EP 2 246 646 A2**
(43) Veröffentlichungstag der Anmeldung: **03.11.2010**
(21) Anmeldenummer: 10160397.5
(22) Anmeldetag: 20.04.2010
(51) Int. Cl.: F24J 2/52

(54) **Dachhaken**

(30) Priorität: 20.04.2009 DE 202009002079 U
(71) Anmelder: Solartekt GmbH, 32760 Detmold (DE)
(72) Erfinder: Marschall, Franz Josef, 32760 Detmold (DE)
(74) Vertreter: Strauss, Hans-Jochen

(57) **Zusammenfassung**

Um einen Dachhaken (10) zur Befestigung eines von Längs- und Querprofilen gebildeten Traggestells insbesondere für Photovoltaik- oder Solar-Module insbesondere auf den Sparren (2) eines Dachstuhls, wobei der einstückige Dachhaken (10) ein U-förmiges, zur Befestigung mit Lochungen (13) versehenes Fußprofil (11) aufweist, an das ein Kragarm (16) angeformt ist, dessen freies Ende (16.1) höhenversetzt in einer etwa parallel zur Fußplatte (12) des Fußprofils (11) verlaufenden Ebene mit einem Befestigungskopf (20; 25) versehen ist, an den eine Befestigungsfahne (21; 26) angeformt ist, die im rechten Winkel zur oder in Richtung der Längserstreckung der Fußplatte (12) verläuft, so weiter zu bilden, dass der Spannungsverlauf im Dachhaken optimiert und so der Lastverlauf vergleichmäßigt wird und in Weiterführung das Übertragen baurechtlich bedenklicher Momente unterbunden oder zumindest auf baurechtlich zulässige Basis gestellt werden, wird vorgeschlagen, dass der Querschnitt des Kragarms (16) vom Fußprofil (11) zum Tragarm (18; 19) in mindestens einem Teilbereich so zunimmt, dass im Lastfall der Spannungsverlauf im Kragarm (16) vergleichmäßigt ist.

## Beschreibung

Die Erfindung betrifft einen Dachhaken zur Befestigung eines von Längs- und Querprofilen gebildeten Traggestells insbesondere für Photovoltaik- oder Solar-Module auf einem Schrägdach, nach dem Oberbegriff des Anspruchs 1.

Zur Montage einer Solarzellen- oder einer Photovoltaikanlage auf Schrägdachflächen werden Dachhaken auf die Sparren aufgesetzt und festgeschraubt. Dazu weisen die Dachhaken ein Fußprofil auf, das mit einer entsprechenden, eine Maßangleichung erlaubenden Lochung versehen ist, und an dem ein Kragarm vorgesehen ist, der in einem der Breite der Photovoltaik- oder Solar-Module entsprechenden Abstand unter den Dachpfannen/ Dachschindeln durchgeführt ist, wobei bei Pfannendeckung der Kragarm im Bereich eines Wellentales der Dachpfanne liegt. Das hinreichend breite Fußprofil liegt dabei so, dass eines seiner Lochungen eine Verschraubung mit dem Dachsparren erlaubt. Nach dem Festlegen des Dachhakens an dem Dachsparren werden die entsprechend durch zusätzliche Bearbeitung angepassten Dachpfannen/Dachschindeln wieder in ihre ursprüngliche Lage gebracht.

Der aus der Dachfläche ragende Kragarm weist an seinem freien Ende eine rechtwinklig abstehende Befestigungsfahne auf, deren freies Ende als mit den Quer- bzw. Längsprofilen des Traggestells für die Photovoltaik- oder Solar-Module zusammenwirkenden Befestigungskopf ausgebildet ist.

Die DE 10 2005 043 957 offenbart einen Dachhaken zur Montage von Solaranlagen auf Dächern mit einem sich in X- und Y-Richtung erstreckenden Befestigungsabschnitt zum Festlegen des Dachhakens am Dach, einem Halteabschnitt zur Festlegung des Solaranlagenmoduls oder einem Befestigungsprofil dafür. Dieser Dachhaken ist einstückig ausgebildet mit einem Halteabschnitt, der einen etwa rechtwinklig (in Z-Richtung) zu dem Befestigungsabschnitt verlaufenden Übergangsschenkel aufweist, an den sich ein hinterer, etwa in Y-Richtung verlaufender Stützschenkel mit einem sich etwa in Z-Richtung erstreckenden Bodenschenkel anschließt. Um einen Dachhaken zu erhalten, der trotz reduziertem Gewicht extrem belastbar ist, wird dieser aus Aluminiumguss gebildet und weist mindestens eine Verstärkungsrippe auf, wobei sich eine Verstärkungsrippe dem Befestigungsabschnitt bis zum Halteabschnitt über mindestens eine Teillänge des Übergangsschenkels erstreckt.

Nachteilig ist dabei in vielen Fällen, dass über die Verbindung zum Dachsparren neben den Längs- und Querkräften neben Drehmomenten auch Biegemomente eingeleitet werden, die die Schrauben überlasten können und somit als statisch bedenklich anzusehen sind.

Somit stellt sich die Aufgabe, den Dachhaken so auszubilden, dass zur Verringerung des Materialeinsatzes der Spannungsverlauf im Dachhaken optimiert und so der Lastverlauf vergleichmäßigt wird; in Weiterführung der Aufgabenstellung soll das Übertragen solcher baurechtlich bedenklicher Momente unterbunden oder zumindest auf baurechtlich zulässige Basis gestellt werden.

Diese Aufgabenstellung lässt sich für einen gattungsgemäßen Dachhaken mit Hilfe der kennzeichnenden Merkmale des unabhängigen Hauptanspruchs lösen; vorteilhafte Weiterbildungen und bevorzugte Ausführungsformen beschreiben die Unteransprüche.

Der Dachhaken besteht aus einer Fußplatte, die in einen Kragarm übergeht, dessen freies Ende mit einem Befestigungskopf zur Befestigung der Profile des die Photovoltaik- oder Solar-Module aufnehmenden Gitterwerks versehen ist. Dazu ist er so ausgebildet, dass sein Querschnitt vom Fußprofil zum Tragarm hin verlaufend so zunimmt, dass im Lastfall der Spannungsverlauf im Kragarm ein gleichmäßiger ist. Diese Zunahme des Querschnitts ist dabei in mindestens einem Teilbereich des Kragarms vorgesehen.

Die Fußplatte eines U-förmigen, mit einer Lochreihe versehenen Fußprofils wird dabei breiter ausgeführt, als die Breite der Dachsparren ist. Dabei können auch zumindest einige der zum Verschrauben mit den Dachsparren vorgesehenen Löcher der Lochung als Langlöcher ausgebildet sein. Dies erlaubt, neben einem Ausgleich von Maßunterschieden bei der Anordnung der Dachsparren gegenüber den von den Photovoltaik- oder Solar-Modulen vorgegebenen Maßen.

Werden die Dachhaken mit mehreren Schrauben an den Sparren befestigt, ist unvermeidbar, dass dabei durch Dachhaken übertragene Kräfte Einspannmomente mit unerwünschter Dreh- bzw. Biegemomenten zur Folge haben. Um für solche Konstruktionen, mit form- oder kraftschlüssiger fixer Verbindung - beispielsweise durch korrespondierende Rifflungen - zwischen den die Photovoltaicmodule tragenden Profilen und dem Dachhaken ein statisch bestimmtes System zu schaffen, bedarf es neben fixen Verbindungen eines statischen Gelenks. Dies wird für diese Dachhaken durch das Befestigen am Dachstuhl, am Sparren durch eine einzige, durch eines der Löcher der Lochung geführten Sparrenschrauben realisiert. Damit wird ein statisches Gelenk gebildet, das unerwünschte, von Auflagereaktion bedingte Momente, wie Drehmomente oder Biegemomente in die Dachkonstruktion eingeleitet werden, verhindert. So ist es als vorteilhaft anzusehen, für die Befestigung des Dachhakens an dem Dachstuhl, an dem Sparren, ein solches statisches, Gelenk vorzusehen. Eine solche gelenkige Verbindung lässt Drehmomente mit ihren Wirkungen zu, ohne hieraus unzulässig Biegemomente entstehen zu lassen.

An das Fußprofil ist ein etwa U-förmig ausgebildeter Kragarm angeformt, dessen freies Ende höhenversetzt in einer Parallel-Ebene zur Fußplatte des Fußprofils verläuft. In den so gebildeten Bogen lassen sich die Dachpfannen einfügen, so dass das freie Ende des Kragarmes durch die Dachfläche geführt ist und mit dem Gitterwerk zur Aufnahme der Photovoltaik- oder Solar-Modulen verbunden werden kann.

Zur Befestigung mit den die Photovoltaik- oder Solar-Module tragenden Profilen des Gitterwerks ist das freie Ende des Kragarms als Befestigungskopf ausgebildet, der in eine Befestigungsfahne übergeht. Durch die Anordnung der Profile ist es notwendig, die Dachhaken entweder mit den in Sparrenrichtung verlaufenden Profilen oder mit dem quer dazu verlaufenden Profil verbinden zu müssen. Dazu ist bei einer ersten Ausführungsform die Befestigungsfahne rechtwinklig zum Kragarm ausgerichtet, wobei die als Platte ausgebildete Befestigungsfahne mit ihrer Breite in Längsrichtung des Kragarms und bei einer zweiten Ausführungsform, bei der die am Ende des Kragarms vorgesehene Befestigungsfahne mit ihrer Breite in Querrichtung des Kragarmes liegt, wobei die Befestigungsfahne selbst in einer sowohl zur Ebene der Fußplatte wie auch zur Kragarm-Ebene rechtwinklig ausgerichteten Ebene liegt.

Bei der ersten Ausführungsform wirken die jeweiligen Befestigungsfahnen mit den in Sparrenrichtung verlaufenden Profilen des die Photovoltaik- oder Solar-Module aufnehmenden Gitterwerks, die sich kraftschlüssig an die Befestigungsfahne anlegen. Bei der zweiten Ausführungsform liegen die quer dazu verlaufenden Profile an diesen Befestigungsfahnen an. Während im ersten Fall der Kraftfluss durch den Kraftschluss gesichert ist, ist es von Vorteil, wenn im zweiten Fall ein zusätzlicher Formschluss vorgesehen ist. Um den gewünschten Formschluss zu erreichen, ist die Befestigungsfahne mit einer Riffelung versehen. Diese wirkt mit einer korrespondierenden Riffelung der Profile des die Photovoltaik- oder Solar-Module tragenden Gitterwerks formschlüssig zusammen.

Durch die mit Formschluss oder Kraftschluss oder auch mit einer Kombination beider hergestellten festen Verbindung zwischen dem Befestigungskopf und dem Profil des Tragegestells für die Photovoltaik- oder Solar-Module werden statisch unbestimmte Verbindungen vermieden. Somit ergibt sich für die Spannungsverteilung im Kragarm mit Befestigungsfahne ein Verlauf, der eine Verringerung des Querschnitts vom Befestigungskopf hin zum Fußprofil erlaubt. Dies bedeutet eine Gewichts- und Materialeinsparung, die eine wirtschaftlichere Herstellung des Dachhakens ermöglicht. In der Praxis konnte die Dicke des Materials vom Befestigungskopf bis zum Fußprofil um 50% verringert werden. Durch diese Kragarmbefestigung werden Längs- und Querkräfte über die Schraubverbindung in die Dachsparren und somit in den Dachstuhl eingeleitet, nicht jedoch Momente. Die Belastbarkeit der Schraubverbindung wird dadurch wesentlich erhöht, wobei die Erhöhung in der Praxis das zwei- oder auch mehrfache beträgt.

Der Dachhaken ist als einstückiges Druckgussstück vorzugsweise aus Aluminium ausgebildet. An seinem U-förmigen und mit der Lochung versehenen Fußprofil ist am Kragarm eine mit ihrer Breite rechtwinklig dazu ausgerichtete Befestigungsfahne vorgesehen, deren freies Ende als Befestigungskopf ausgebildet ist. Dieser weist an seinem freien Ende ein Aufnahmestück auf, das im Zusammenwirken mit den Quer- bzw. Längsprofilen das Aufnahmegestell für die Photovoltaik- oder Solar-Module bildet.

Um einen Maßausgleich für Überlattungen in unterschiedlichen Höhen zu ermöglichen, sind Ausgleichsstücke vorgesehen, die vorteilhaft an den Fußprofilen festgelegt werden. Dies vereinfacht die Montage erheblich, da es keines weiteren Haltens bedarf und die Hände des Monteurs für das Befestigen des Dachhakens an Dachsparren bzw. Konterlattung frei bleiben. Dazu sind bei einer anderen Ausführungsform die Fußprofile nahe ihrem Boden mit Nuten versehen, in die Ausgleichsstücke mit ihren Winkelleisten, die in die Nuten eingreifen, eingesetzt werden. In anderer Ausführungsform weist das Ausgleichsstück eine Clipsanordnung auf, mit der es am Fußprofil mit Form- oder Kraftschluss oder einer Kombination beider befestigt werden kann.

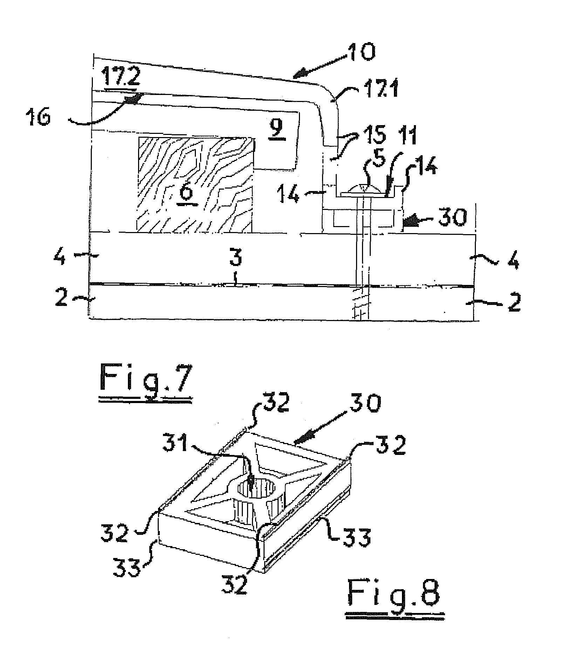

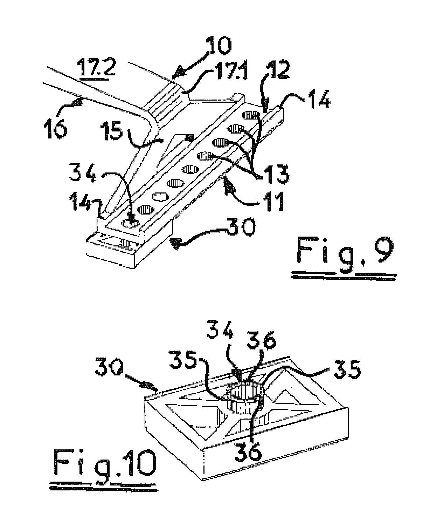

Das Wesen der Erfindung wird an Hand der in den Figuren 1 bis 10 dargestellten Ausführungsbeispielen näher erläutert; dabei zeigen
- Fig. 1:: Dachhaken mit Befestigungsfahne quer zur Sparrenrichtung (schematische Perspektive);
- Fig. 2a:: Dachhaken gemäß Fig. 1 Seitenansicht - schematisch;
- Fig. 2b:: Dachhaken gemäß Fig. 1 Rückansicht - schematisch;
- Fig. 3:: Dachhaken gemäß Fig. 1 auf Konterlatte (schematisch);
- Fig. 4:: Dachhaken mit Befestigungsfahnen in Sparrenrichtung (schematische Perspektive);
- Fig. 5a:: Dachhaken gemäß Fig. 4 (Seitenansicht - schematisch);
- Fig. 5b:: Dachhaken gemäß Fig. 4 (Rückansicht - schematisch);
- Fig. 6:: Dachhaken gemäß Fig. 4 auf Konterlatte (schematisch);
- Fig. 7:: Dachhaken mit angesetztem Höhenausgleich auf Konterlatte (abgebrochen - schematisch);
- Fig. 8:: Einzelheit Fußprofil mit angesetztem Ausgleichsstück auf Konterlatte - schematisch);
- Fig. 9:: Dachhaken mit angeclipstem Höhenausgleich auf Konterlatte (abgebrochen - schematisch);
- Fig. 10:: Einzelheit Fußprofil mit angeclipstem Ausgleichsstück auf Konterlatte schematisch).

Auf dem Dachstuhl eines Schrägdaches (nicht näher dargestellt) mit Sparren 2 und Dachlatten 6 ist eine Photovoltaikanlage (nicht näher dargestellt) angeordnet. In üblicher Weise ist der Dachstuhl mit einer als Dampfsperre wirkenden Dachbahn 3 abgedeckt, die mit auf den Sparren 2 angeordneten Konterlatten 4 gehalten ist. Diese Konterlatten 4 tragen und halten dann auch die zur Dachdeckung aufgelegten Dachpfannen 9. Zur Verbindung der einzelnen Module dieser Anlage mit dem Dachstuhl sind Dachhaken 10 vorgesehen, die mit ihrem Fußprofil 11 mit der Sparrenschraube 5 auf die Sparren 2 mit Konterlattung 4 aufgeschraubt sind. Dabei liegt die Fußplatte 12 an der Oberseite der Konterlatte 4 an. Zum Verschrauben sind Lochungen 13 in einer Lochreihe vorgesehen, wobei die Breite des Fußprofils 11 so breit ist, wie der Abstand der Wellentäler handelsüblicher Dachpfannen 9. Dies erlaubt ein Anpassen an die Lagedifferenzen der Wellentäler der Dachpfannen zu den Sparren 2 des Dachstuhls so, dass für den Dachhaken immer eine in Bezug auf die Breite des Sparrens 2 mittige Lage eine der Lochungen 13 genutzt werden kann.

Der Dachhaken 10 selbst besteht aus dem Fußprofil 11 an das sich ein Kragarm 16 anschließt. Dieser geht von einem Übergang 15 aus und besteht aus einem bogenförmigen Arm 17.1, einem ansteigenden Arm 17.2 und einem Übergangsstück 17.3, das in das freie Ende 16.1 des Kragarms 16 übergeht, an das sich ein Tragarm 18 anschließt, dessen freies Ende mit einem Befestigungskopf 20 bzw. 25 mit Befestigungsfahne 21 bzw. 26 versehen ist. An der Befestigungsfahne ist das zu haltende Gitterwerk-Profil 7.1 bzw. 7.2 des Tragwerks mittels Formschluss oder Kraftschluss oder einer Kombination beider befestigt.

Das Fußprofil 11 ist im Wesentlichen C-förmig ausgebildet, wobei dessen mittleres Teil die Fußplatte 12 zur Anlage an der korrespondierenden Außenfläche des Gitterwerk-Profils 7.1 bzw. 7.2 bildet. Diese Fußplatte weist die in einer Reihe angeordneten Lochungen 13 auf, wobei durch eines der Lochungen 13 die Sparrenschraube 5 zum Verschrauben des Dachhakens 10 mit den Sparren 2 durch die Konterlatte 4 geführt ist. Diese Befestigung mit nur einer Schraube ermöglicht ein Verdrehen so, dass die Befestigungsfahne 21 des Dachhakens 10 immer zum flächigen Anliegen an das Gitterwerk-Profil 7.1 bzw. 7.2 gebracht werden kann, so dass der Form- und/oder der Kraftschluss sicher gestellt ist. Dies erlaubt bei einer ersten Ausführungsform das Anbinden von Gitterwerk-Profilen mit einem Verlauf parallel zur Traufe bzw. rechtwinklig zu den Sparren und bei einer zweiten Ausführungsform von Gitterwerk-Profile die rechtwinklig zur Traufe bzw. in Sparrenrichtung ausgerichtet sind.

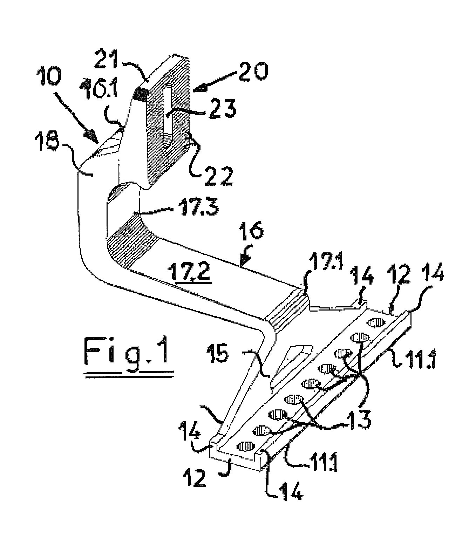

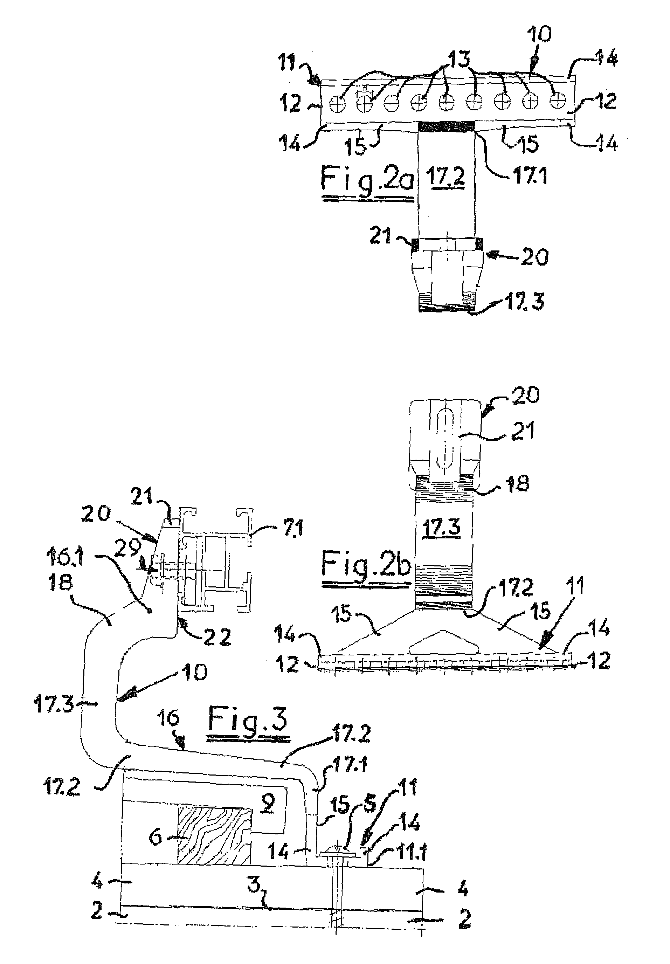

Bei der ersten Ausführungsform (Fig. 1 - 3) geht das freie Ende des Kragarms 16 in ein Übergangsstück 15 über, das in einem Tragarm 18 mit endständigem Befestigungskopf 20 endet. Der Befestigungskopf 20 weist für diese Ausführungsform eine Befestigungsfahne 21 auf, deren Anlagefläche mit dem an diesen Dachhaken 10 anzubindenden, quer zu den Sparren 2 verlaufenden Tragwerk-Profil zusammenwirkt. Um bei dieser Ausführungsform den Querschnitt des Kragarms 16 mit Übergangsstück dem Kraftverlauf optimal anzupassen, wird dieser so angepasst, dass im Bereich des ansteigenden Arms 17.2 der Querschnitt um mindestens 33 % vom Fußprofil 11 hin zum Übergangsstück 17.3 zunimmt.

Vorteilhaft nimmt auch der Querschnitt des Kragarms 16 vom ansteigenden Arm 17.2 des Kragarms 16 hin zum Tragarm 18 um mindestens 20 % zu. Dabei ist es vorteilhaft, die Querschnittsanpassung durch entsprechenden Verlauf der Breite des ansteigenden Armes 17.2 bzw. des Übergangsstücks 17.3 zu realisieren. Um einen guten Formschluss zwischen der Anlagefläche von (hier quer zur Sparrenrichtung liegenden) Befestigungsfahne 21 und der Anlagefläche des zugeordneten Gitterwerk-Profils 7.1 zu erreichen, sind die zusammenwirkenden Flächen mit Riffelungen 22 versehen. Mit der durch die Schrauböffnung 23 geführten Profilschraube 29 werden diese Flächen gegeneinander gezogen, so dass die Riffelungen formschlüssig ineinander greifen. Die vom Tragwerk der Photovoltaik- bzw. Solar-Modulen übertragenen Kräfte werden auf diese Weise günstig in den Dachhaken eingeleitet.

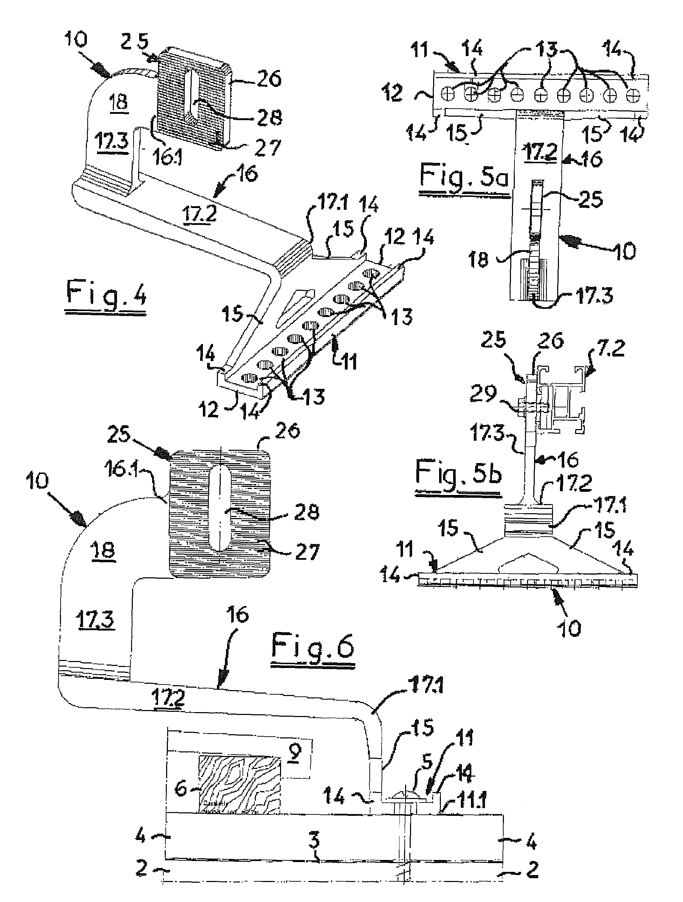

Bei der zweiten Ausführungsform (Fig. 4 - 6) ist auf das freie Ende des Kragarms 16 der Tragarm 19 aufgesetzt, der in den Befestigungskopf 25 übergeht. Dieser Befestigungskopf 25 weist für diese Ausführungsform eine Befestigungsfahne 21 auf, deren Anlagefläche mit dem an diesen Dachhaken 10 anzubindenden, in Richtung der Sparren 2 verlaufenden Gitterwerk-Profil 7.2 zusammenwirkt. Die hier in Richtung der Befestigungsfahne wirkenden Kräfte erzwingen einen hinreichenden Kraftschluss. Dieser wird durch die Verschraubung mit der durch die Schrauböffnung 28 geführten Profilschraube 29 erreicht. Auch hier wird über die Riffelung ein Formschluss erreicht, der wegen des gebildeten statischen Gelenks zu einer baurechtlich unbedenklichen Übertragung auch von Dreh- bzw. Biegemomenten führt.

Wegen der in der Praxis auftretenden unterschiedlichen Höhen der Konterlatten 4 bedarf es bei der Anwendung der Dachhaken 10 einer Höhenanpassung. Diese kann in einfacher Weise durch Ausgleichsstücke 30 erreicht werden. Diese Ausgleichstücke 30 weisen eine Lochung 31 auf, durch die die Sparrenschraube 5 zum Verschrauben mit den Sparren 2 geführt wird. Dabei kann das Ausgleichsstück 30 so eingestellt werden, dass die Sparrenschraube 5 durch eine der Lochungen 13 der Fußplatte 12 in die Latte der Konterlattung 4 eingeschraubt werden kann, wobei die Lochung 31 des Ausgleichsstückes 30 mit der Lochung 13 der Fußplatte 12 fluchtet.

Um mit solchen Ausgleichstücken 30 auch auf Dächern problemlos hantieren zu können, ist es vorteilhaft, die Ausgleichstücke 30 an den Dachhaken 10 halten zu können. Bei einer ersten Ausführungsform weisen die Fußplatte 12 der Fußprofile 11 nahe der Anlagefläche längs verlaufende Nuten auf, die im Zusammenwirken mit an dem Ausgleichsstück vorgesehenen Winkelleisten 32 das Ausgleichstück 30 verschiebbar an der Fußplatte 12 des Dachhakens 10 halten. Bei einer zweiten Ausführungsform weist das Ausgleichstück 30 Clipsmittel auf, mit denen es an die Fußplatte 12 des Dachhakens 10 angeclipst werden kann. Eine solche Ausführung eines solchen Clipsmittels besteht beispielsweise aus elastischen Winkeln, die die Fußplatte 12 beidseits übergreifen und das Ausgleichsstück 30 halten.

Eine andere Möglichkeit ist durch einen in der Lochung 31 des Ausgleichsstücks 30 als Clips vorgesehenen Buchse 34 gegeben. Die Buchse 34 weist zumindest einen Schlitz 35 auf und ist mit einer Wulst 36 versehen. Durch eine Lochung 13 der Fußplatte 12 geführt, wird diese so druckknopfartig hintergriffen. Dabei gewährleisten der/ die Schlitz/-ze 35 die für das Hintergreifen durch die Wulst 35 notwendige Nachgiebigkeit der Buchse 34. Durch diese Clipsmittel werden die Ausgleichsstücke 30 an den Fußplatten 12 fixiert und können nicht abfallen, was die Montage erheblich erleichtert. Dass diese Halterung keine Verschiebbarkeit aufweist, ist bedeutungslos, da die möglichen Stellungen des Ausgleichsstückes 30 an der Fußplatte 12 von deren Lochungen 13 vorgegeben sind.

### Bezugszeichen:

- 01:
- 02: Sparren
- 03: Dachbahn (Dampfsperre)
- 04: Konterlattung
- 05: Sparrenschraube
- 06: Dachlattung
- 07.1: Gitterwerk-Profil quer zur Sparrenrichtung
- 07.2: Gitterwerk-Profil in Sparrenrichtung
- 08: Profilschraube
- 09: Dachpfanne
- 10: Dachhaken
- 11: Fußprofil
- 11.1: Nuten
- 12: Fußplatte
- 13: Lochung
- 14: hochstehende Seitenstreifen
- 15: Übergang
- 16: Kragarm
- 17.1: bogenförmiges Übergangsstück
- 17.2: ansteigender Arm
- 17.3: Übergangsstück bogenförmig
- 18: Tragarm
- 19: Tragarm
- 20: Befestigungskopf (Anlage quer zum Sparrenverlauf)
- 21: Befestigungsfahne quer zum Kragarm
- 22: Riffelung
- 23: Schrauböffnung
- 24:
- 25: Befestigungskopf (Anlage in Sparrenverlauf-Richtung)
- 26: Befestigungsfahne in Richtung Kragarm
- 27: Riffelung
- 28: Schrauböffnung
- 29: Profilschraube
- 30: Ausgleichsstücke
- 31: Lochung
- 32: Winkelleiste
- 33: Nut
- 34: Buchse - Buchse
- 35: Schlitz
- 36: Wulst

## Patentansprüche

1. Dachhaken (10) zur Befestigung eines von Längs- und Querprofilen gebildeten Traggestells insbesondere für Photovoltaik- oder Solar-Module auf einem Schrägdach, insbesondere auf den Sparren (2) eines Dachstuhls, wobei der Dachhaken (10) einstückig hergestellt ist und ein U-förmiges, zur Befestigung an dem Dachstuhl mit Lochungen (13) versehenes Fußprofil (11) aufweist, .an das ein Kragarm (16) angeformt ist, dessen freies Ende (16.1) höhenversetzt in einer etwa parallel zur Fußplatte (12) des Fußprofils (11) verlaufenden Ebene mit einem Befestigungskopf (20; 25) versehen ist, an den eine Befestigungsfahne (21; 26) angeformt ist, die im rechten Winkel zur oder in Richtung der Längserstreckung der Fußplatte (12) verläuft, **dadurch gekennzeichnet, dass** der Querschnitt des Kragarms (16) vom Fußprofil (11) zum Tragarm (18; 19) verlaufend so zunimmt, dass im Lastfall der Spannungsverlauf im Kragarm (16) vergleichmäßigt ist, wobei die Querschnittszunahme in mindestens einem Teilbereich des Kragarms (16) vorgesehen ist.

2. Dachhaken nach Anspruch 1, **dadurch gekennzeichnet, dass** die Querschnittszunahme des Kragarms (16) durch eine Zunahme seiner Breite realisiert ist, wobei die Zunahme im Wesentlichen im ansteigenden Arm (17.2) des Kragarms (16) vorgesehen ist und mindestens 33% beträgt.

3. Dachhaken nach Anspruch 1 oder 2, **dadurch gekennzeichnet, dass** die Querschnittszunahme des Kragarms (16) durch Zunahme ihrer Dicke realisiert ist, wobei die Zunahme im Wesentlichen im ansteigenden Arm (17.2) des Kragarms (16) vorgesehen ist und mindestens 20% beträgt.

4. Dachhaken nach einem der vorgehenden Ansprüche 1 bis 3, **dadurch gekennzeichnet, dass** die mit den Profilen (7.1; 7.2) des Traggestells zusammenwirkende Fläche des Befestigungskopfes (20; 25) sowie die entsprechenden Flächen der Profile korrespondierende Riffelungen für ein formschlüssiges Verbinden aufweisen.

5. Dachhaken nach Anspruch 4, **dadurch gekennzeichnet, dass** zur Befestigung an dem Dachstuhl ein statisches, Gelenk vorgesehen ist, das von einer einzigen, durch ein Loch der Lochung (13) geführten Sparrenschraube (5) gebildet ist.

6. Dachhaken nach einem der vorgehenden Ansprüche 1 bis 5, **gekennzeichnet durch** ein Ausgleichstück (30), das an die Fußplatte (12) des Dachhakens (10) ansetzbar ist.

7. Dachhaken nach Anspruch 6, **dadurch gekennzeichnet, dass** als Mittel zum Ansetzen des Ausgleichstückes (30) an den Dachhaken (10) dessen Fußplatte (12) mit längs verlaufenden Nuten (11.1) versehen ist, und dass das Ausgleichsstück (30) dazu korrespondierende Winkelleisten (32) aufweist, wobei durch die Aufnahme der Winkelleisten (32) in den längs verlaufenden Nuten (11.1) das Ausgleichsstück an der Fußplatte (12) des Dachhakens (10) verschiebbar gehalten ist.

8. Dachhaken nach Anspruch 6 oder 7, **dadurch gekennzeichnet, dass** das Ausgleichsstück (30) selbst Nuten (33) aufweist, die mit den Winkelleisten (32) eines weiteren Ausgleichsstücks (30) zusammenwirken.

9. Dachhaken nach Anspruch 6, **dadurch gekennzeichnet, dass** das Ausgleichsstück (30) mit Clipsen versehen ist, mit denen dieses Ausgleichsstück (30) an der Fußplatte (12) des Dachhakens unverlierbar gehalten ist.

10. Dachhaken nach Anspruch 9, **dadurch gekennzeichnet, dass** als Clips eine in die Lochung (31) des Ausgleichsstückes (30) einsetzbare Buchse (34) vorgesehen ist, die die Oberseite des Ausgleichsstückes (30) um mindestens die Dicke der Fußplatte (12) überragt und eine die Fußplatte (12) hintergreifende Wulst (36) aufweist, wobei vorzugsweise der Einsatz (34) zum Verclipsen zumindest einen Schlitz (35) aufweist.
